(19)

Europäisches
Patentamt
European
Patent Office
Office européen
des brevets

(11) **EP 2 856 082 B1**

(12) **EUROPEAN PATENT SPECIFICATION**

(45) Date of publication and mention
of the grant of the patent:
**27.06.2018 Bulletin 2018/26**

(51) Int Cl.:
***G01D 5/353*** *(2006.01)*

(21) Application number: **13737365.0**

(86) International application number:
**PCT/IB2013/001075**

(22) Date of filing: **29.05.2013**

(87) International publication number:
**WO 2013/179118 (05.12.2013 Gazette 2013/49)**

(54) **SYNOPTIC FIBER OPTIC SENSOR**

SYNOPTISCHER FASEROPTISCHER SENSOR

CAPTEUR À FIBRES OPTIQUES SYNOPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2012 IT BG20120026**

(43) Date of publication of application:
**08.04.2015 Bulletin 2015/15**

(73) Proprietors:
• **Politecnico di Milano**
**20133 Milano (IT)**
• **Cohaerentia S.r.l.**
**20133 Milano (IT)**

(72) Inventors:
• **MARTINELLI, Mario**
**I-20097 San Donato Milanese (IT)**
• **FERRARIO, Maddalena**
**I-20050 Verano Brianza (IT)**

(74) Representative: **Gatti, Enrico**
**Giambrocono & C. S.p.A.**
**Via E. Zambianchi, 3**
**24121 Bergamo (IT)**

(56) References cited:
**WO-A1-02/48654       WO-A2-2009/016458
CA-A1- 2 547 244     FR-A1- 2 613 065
US-A- 5 027 436**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

The present invention relates to a fiber optic sensor, and in particular to a fiber optic sensor able to sense, preferably simultaneously, all the information of mechanical, thermal and magnetic type relating to the sensing fiber and consequently known as "synoptic" (from "synopsis", overall view), and to the relative method for monitoring variations preferably of mechanical, thermal and magnetic type.

The development of control and predictive diagnosis systems for machines and production lines is assuming an increasingly greater key role in improving their reliability and productivity, with beneficial effects also in terms of energy saving as a result of continuous monitoring of the machine operative cycle.

The implementation of predictive diagnosis for early identification of machine operating irregularities requires a suitable sensing technology, i.e. sensors, for measuring variations in the machine operative parameters. The choice of the most appropriate sensor depends on various factors, such as the ability to access certain measurement points, the influence of environmental noise and the accuracy required. A wide range of sensing devices exists in commerce for diagnostic systems, based mainly on conventional sensors of electrical type (accelerometers, vibrometers, strain-gauges, thermocouples) which exploit piezoelectric (piezoresistive, piezocapacitive), extensometric and thermoresistive effects. Solutions based on a fiber optic approach have also recently been considered, particularly in those contexts in which fiber immunity towards the most common disturbance factors affecting electrical sensors (radio-frequencies, microwaves, electromagnetic fields, nuclear radiation) is a priority factor. Fiber optic sensors are of very small dimensions, are easy to adapt to the structure to be monitored, have a long term stability unequalled in corresponding resistive systems and furthermore offer the possibility of remote monitoring, essential in hostile or difficultly accessible environments, but also advantageous for many industrial/manufacturing applications.

Fiber optic sensors typically used in an industrial environment are often sensors in which in reality the optical fiber serves exclusively for carrying the optical signal: for example the transducer element is a grating inscribed into the fiber or a material deposited at the head of the fiber which when acted on by physical quantities (temperature, pressure, force, displacement) varies its capacity to reflect/transmit the optical signal. In fact these fiber optic sensors replace conventional electrical sensors in dedicated acceleration, vibration or temperature measurements of punctual type. The document FR2613065 discloses a fiber optic sensor according to the state of the art. An object of the present invention is to provide a fiber optic sensor able to map the operative conditions of the entire machinery/structure with minimum invasivity, i.e. without having to use a large number of punctual sensors, whether conventional or of fiber optic type.

This and other objects are attained according to the present invention by a fiber optic sensor as described in the accompanying claims.

Further characteristics of the invention are described in the dependent claims.

This solution has various advantages compared with solutions of the known art.

The synoptic fiber optic monitoring system proposed herein represents the response to the requirement for a low cost sensor able to provide an indication of the overall state of the machinery/structure. The synoptic fiber optic sensor is in fact a concept completely different from both punctual and distributed sensors dedicated to the monitoring of a single parameter. In this respect, the synoptic sensor simultaneously measures the integral of the thermal, mechanical and electrical disturbances which act on the entire length of the sensing fiber. By suitably decoding and interpreting this integral measurement, preferably by comparison with a mathematical model of the structure under examination, an indication can be obtained in real time of the overall operative state of the machine, its evolution with time and its possible entry into critical zones from the safety viewpoint, hence being particularly suitable for the monitoring, control and predictive diagnosis of the machine. The applicational range of the synoptic sensor can however be also advantageously extended to contexts other than the industrial, as an alternative to conventional sensors or to punctual or distributed fiber sensors.

According to the present invention, it is the fiber itself, in its entire length, which directly acts as the transducer: the environmental, mechanical, thermal and magnetic disturbances in fact induce local elongations and variations in the refractive index of the fiber, which are translated mainly into a variation in the phase and polarization of the optical field which propagates through the fiber.

According to the present invention, all this information (mechanical, thermal and magnetic variations) is simultaneously collected by the same sensing fiber along the entire path of the sensing fiber, in an integral manner, while simultaneously monitoring by a coherent reception scheme the phase and polarization state of the optical field. Only by means of a coherent measurement system is it possible to recover and simultaneously separate the evolution of these two parameters and then "decode" the information collected along the sensing fiber by a suitable ultra-fast digital signal processor in the electrical domain. The scheme proposed in the present invention is also able to isolate the collecting fiber from the actual sensing fiber, so rendering only this latter sensitive to the environmental variations concerned.

The synoptic sensor described herein for measuring intrinsic fiber parameters, based on an integral measurement along the entire length of the sensing fiber optic, does not provide punctual mapping of the structure and hence does not enable spatial location of the irregularities.

However, by having available a suitable mathematical model of the thermal/mechanical behaviour of the machinery/structure and a historical malfunction database, interpreting the data provided by the synoptic sensor can provide a level of information sufficient for developing control, predictive diagnosis and alarm procedures.

The characteristics and advantages of the present invention will be apparent from the ensuing detailed description of a practical embodiment thereof, illustrated by way of non-limiting example in the accompanying drawings, in which:

Figure 1 shows schematically a fiber optic sensor in accordance with a first embodiment of the present invention;
Figure 2 shows schematically a fiber optic sensor in accordance with a second embodiment of the present invention;

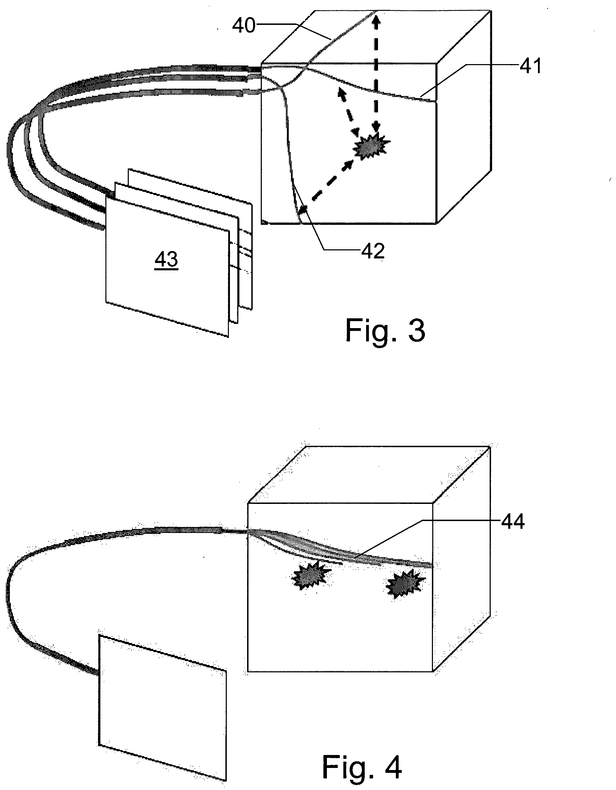

Figure 3 shows schematically a fiber optic sensor formed with several fibers in accordance with a third embodiment of the present invention;
Figure 4 shows schematically a fiber optic sensor formed with several fibers in accordance with a fourth embodiment of the present invention;

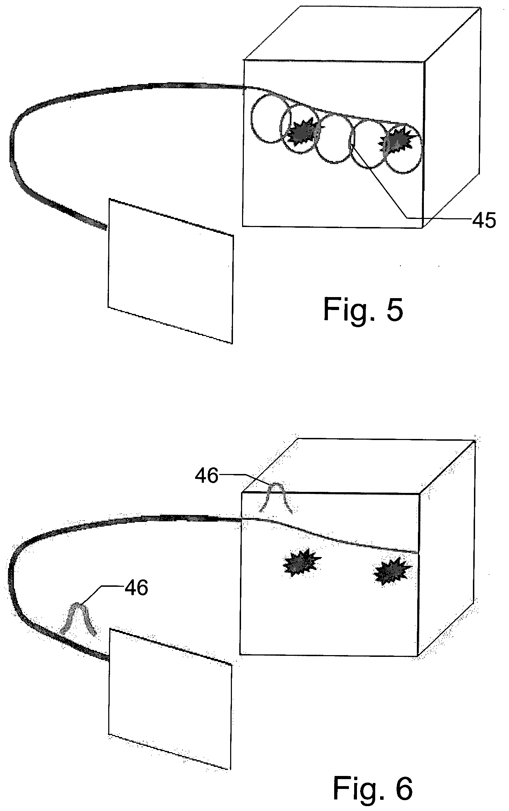

Figure 5 shows schematically a fiber optic sensor formed with particular sensing fiber symmetries in accordance with a fifth embodiment of the present invention;
Figure 6 shows schematically a fiber optic sensor formed with a pulsed source in accordance with a sixth embodiment of the present invention;
Figure 7 shows schematically a simplified fiber optic sensor in accordance with a seventh embodiment of the present invention;
Figure 8 shows schematically a further simplified fiber optic sensor in accordance with an eighth embodiment of the present invention;
Figure 9 shows schematically a further simplified fiber optic sensor in accordance with a ninth embodiment of the present invention;
Figure 10 shows schematically a beam splitter or optical hybrid and its representation as a 2x2 matrix in accordance with the present invention;
Figure 11 shows schematically a phase diversity optical hybrid formed from a beam splitter and a $\pi/2$ phase shifter and its matrix representation, in accordance with the present invention;
Figure 12 shows schematically a phase diversity optical hybrid formed from two beam splitters, in accordance with the present invention.

With reference to the accompanying figures, a fiber optic sensor according to the present invention comprises a preferably continuous (non-pulsed) laser source 10 with a wavelength of 1550 nm, connected to an optical divider 11 of the polarization maintaining type, from which two signals emerge. One signal S is applied to a fiber 12 and is sent to a circulator 13. An output of the circulator 13 is sent to a connector 14.

The other signal OL leaving the optical divider 11 is applied to a fiber 15 and is sent to a polarization maintaining circulator 16. An output of the circulator 16 is sent to the connector 14.

The two signals S and OL hence reach the connector 14. A connection fiber 20 connected to the connector 14 receives the signal S and terminates with a connector 21. A sensing fiber 22 is connected to the connector 21 and terminates with a mirror 23.

The sensing fiber 22 is a standard fiber, possibly clad with suitably selected materials to increase its mechanical and thermal resistance and enable it to also operate under extreme conditions (temperatures, pressures or high stresses). The sensing fiber is secured or bonded to the monitoring zone with the most suitable geometry (or arrangement) for exalting its sensitivity to the thermal and mechanical parameters to be monitored.

Also connected to the connector 14 there is a reference fiber 24, which receives the signal OL and terminates with a Faraday rotation mirror (FRM) 25.

The connection fiber 20 and the reference fiber 24 are of the same length and are inserted into a single optical cable. The signals OL and S must in fact follow the same path as far as the monitoring zone in order that the useful information be exclusively that relative to the length of sensing fiber.

By inserting the connection fiber 20 and the reference fiber 24 into the same cable, the connection fiber 20 is made insensitive to environmental disturbances which could introduce errors during the measurement. Any vibrations or thermal fluctuations outsider the monitoring area would in fact introduce an identical variation (of phase or polarization) into OL and S, which would hence not be detected during reception.

The third exit of the circulator 13, which carries the return signal S from the sensing fiber 22, is applied to a phase and polarization diversity coherent receiver 30.

The third exit of the circulator 16, which carries the return signal OL from the reference fiber 24, is also applied to the coherent receiver 30.

Four optical signals leave the coherent receiver 30: the optical signal phase component I and quadrature component Q for each of the two orthogonal signal polarizations. The use of a coherent receiver represents an essential passage to be able to separate the "phase", "amplitude" and "polarization" variables of the optical field. The entire part involving the extraction of the coded phase or polarization information relative to the different disturbances (mechanical, thermal, magnetic) which act on the sensing fiber is then referred to subsequent digital processing of the electrical domain.

Each of the four exit signals from 30 is then sent to a respective photodiode 31 and then to a respective analog/digital converter 32. The output of the analog/digital converters 32 is applied to a digital signal processor 33.

By means of advanced phase recovery and digital filtration techniques, the digital processor 33 is able to spectrally separate the phase content relative to slow variations (thermal or deformation) from that relative for example to mechanical vibrations. Simultaneously, the information relative for example to the presence of magnetic fields is extracted by analyzing the rotation of the polarization state of S.

All the information is then made available at the processor output, in the form of time series and/or Fourier spectra with the time and frequency resolution required for adequate monitoring of the particular structure under examination.

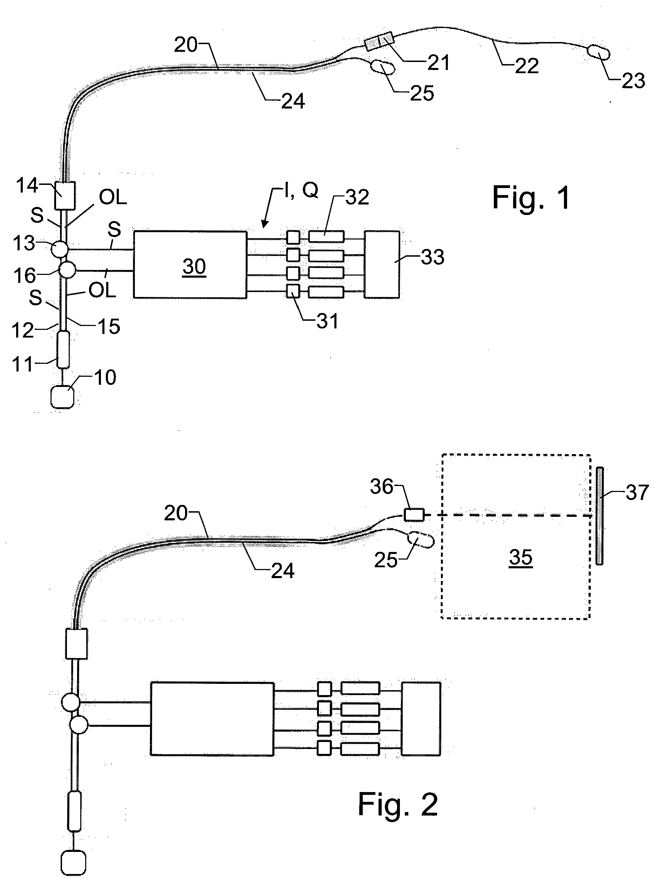

In a variant of the present invention (see Figure 2), as an alternative to the sensing fiber 22 which terminates with a mirror 23, parameters present within a space 35 can be analyzed by propagating the laser signal S through that space. In particular, instead of the connector 21 a collimator 36 is positioned, formed by a GRIN lens and by positioning at a predetermined distance a mirror 37 which reflects the ray which is again conveyed into the connection fiber 20.

In this alternative embodiment, the aforestated concepts relative to Figure 1 are extended to the measurement of parameters extrinsic to the optical fiber, i.e. parameters the values of which are conveyed by the light propagating through the fiber but which are present either in the measurement/propagation space 35 or on the mirror/reflecting sensing fiber 37 or in the fluid containing reflecting materials. If the measurement space is neutral (for example air or a neutral gas or vacuum), the information used for the measurement is transmitted by the mirror/reflecting surface, the measurement consisting of measuring the vibration of the mirror/reflecting surface or of the distance of the mirror/reflecting surface or of the rotation velocity of the mirror/reflecting surface or of the velocity of the fluid containing reflecting materials (typically these are small particles suspended in the fluid and acting as light scatterers which move at the same velocity as the fluid: these particles can be neutral such as red blood corpuscles or the microbubbles which form in certain liquids or are added artificially to the fluid to facilitate measurement). If on the other hand the mirror/reflecting surfaces are fixed, the measurement can relate to the measurement space, the measurement consisting of a measurement of the variation of the optical path within this space (as in the case in which the space consists of a transparent amorphous solid or a liquid which is heated or compressed or expanded). In all the aforestated cases the measurement produces phase, amplitude, polarization or frequency variations in the fiber-conveyed signal, these being quantities which can be received using the aforedescribed coherent reception scheme, to produce either time or spectral series.

For particular requirements it may be essential to monitor particular characteristics/zones of the industrial process/apparatus, and in any event to know how to identify with greater precision where the irregularities encountered with the sensor according to the present invention have taken place.

In this case the synoptic sensor can be provided with several sensing fibers 40, 41, 42, located in different positions, monitored simultaneously by several acquisition cards 43 or time multiplexing with optical switches. By evaluating the individual fiber responses the phenomenon can be located by suitable triangulation.

The arrangement of the sensing fibers can differ by their position (see fibers 40-42) as aforedescribed, by their length (see the different-length fibers 44), by their winding symmetry (see the fiber 45 wound several times) and by the sensitivity of the phenomena to be monitored.

All the information originating from the different fibers is connected synchronously such as to be able to establish a virtual reference system within which the sought characteristic (for example a source of vibration, an electrical discharge) can be identified.

Alternatively, the synoptic sensor source can be modulated 46 (or pulsed) to insert a time axis into the collected information, hence enabling measurements of distributed type to be made (such as in the case of the OTDR - optical time domain reflectometer) along the entire length of the fiber.

In this case, by virtue of the fact that the electrical band of the synoptic sensor coherent receivers, extending as far as tens of GHz, is associated with narrow optical filtering, it is possible not only to analyze the Rayleigh signal (as in the OTDR case), but also the brillouin spectrum to hence be able to extend the synoptic sensor to the analysis of the non-linear response of the sensing fiber to the different environmental factors (temperature, deformations)

According to the present invention, a phase and polarization diversity coherent receiver is preferably used which, in a completely passive manner, provides as output two pairs of optical signals (I and Q), from which the optical field can be completely reconstructed (and the amplitude, phase and frequency of the light be subsequently extracted).

This measurement is made for both the orthogonal field polarization components to also reconstruct the signal polarization state. In this manner the proposed reception scheme enables correct reconstruction of the phase time evolution, induced by mechanical vibrations or thermal variations, and at the same time also of the optical signal polarization state, by possible current or magnetic field measurements, independently of optical signal amplitude variations which can occur during propagation through fiber (e.g. by excessive curvatures or pressures).

For this purpose a device is used (a 90° optical hybrid) which can be obtained by a double BS (beam splitter) configuration which separates both the signal S and the signal OL into two different paths, in one of which however a 90° delay plate is inserted to obtain at its outlet the two components I and Q in quadrature (i.e. phase shifted by 90°) of a fixed polarization component of the signal S.

The device must however also be of polarization diversity in addition to phase diversity to enable recovery, for any polarization state of the input signal S, of the phase and amplitude information (I and Q) of both the signal polarization components. In this case in the input stage of the "phase and polarization diversity" receiver both the signal S and the signal OL are projected in two main polarization states (typically vertical and horizontal) by PBSs (polarization beam splitters). The corresponding S and OL polarization components are then mixed together, each via a scheme similar to the aforedescribed ("phase diversity") which provides at its output the signals I and Q of a single polarization component of S.

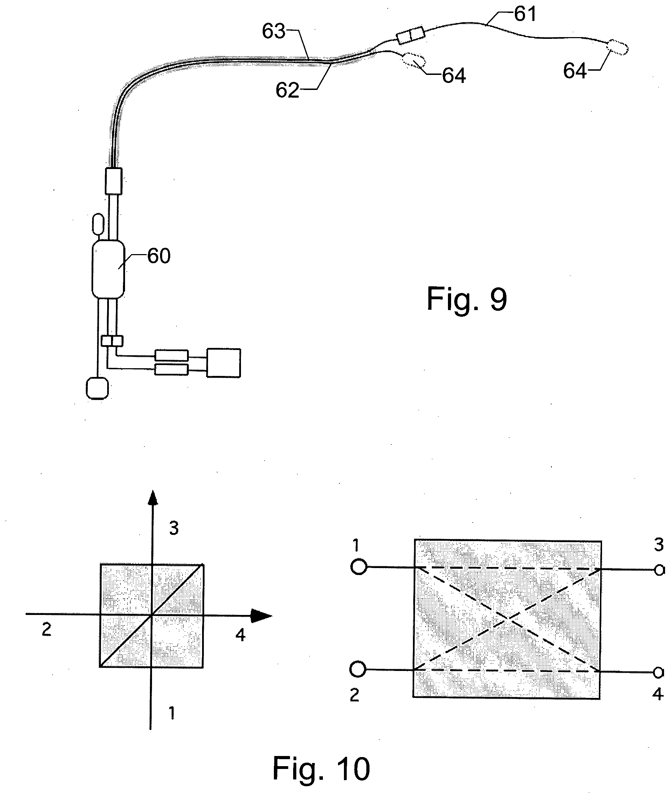

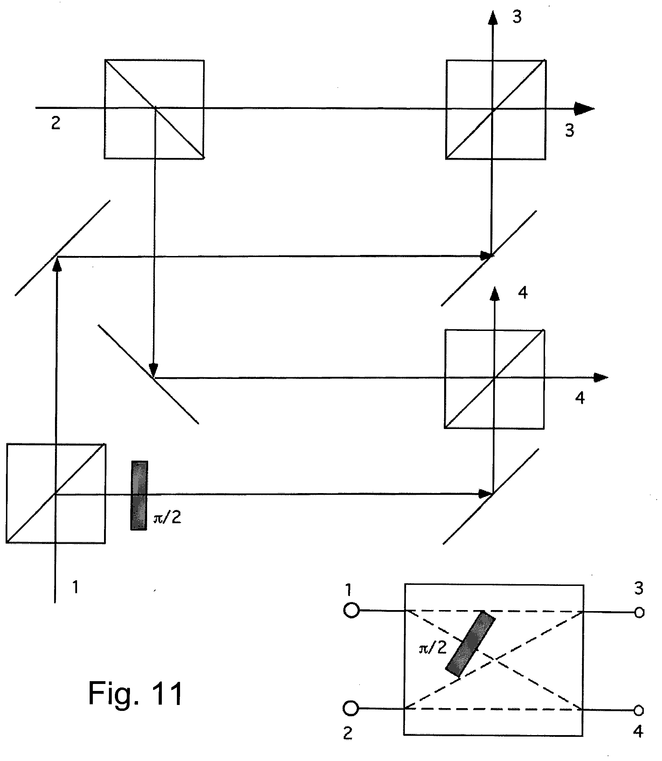

In particular, in its most classic meaning, a coherent receiver consists of a mixer between the signal S and a local oscillator OL, usually in the form of a BS-beam splitter (also called an optical hybrid) and representable as in Figure 10 by a 2x2 matrix which transforms the input field signal 1, 2 into an output signal. However, to access all the optical field phase information by coherent measurement, the output signals 3 and 4 must be in quadrature, i.e. phase displaced by $\pi/2$. For this purpose a "phase diversity" hybrid is used shown in Figure 11, of which the corresponding matrix is:

$$\begin{pmatrix} 3 \\ 4 \end{pmatrix} = \begin{pmatrix} \dfrac{1}{\sqrt{2}} & \dfrac{1}{\sqrt{2}} \\ \dfrac{1}{\sqrt{2}}e^{i\pi/2} & \dfrac{1}{\sqrt{2}} \end{pmatrix} \cdot \begin{pmatrix} 1 \\ 2 \end{pmatrix}$$

and the two output signals at gates 3 and 4 are in intensity are therefore:

$$I(3) = \frac{1}{2} + \frac{1}{2} + 2\sqrt{\frac{1}{2}\frac{1}{2}}\cos[\varphi(1) - \varphi(2)]$$

$$I(4) = \frac{1}{2} + \frac{1}{2} + 2\sqrt{\frac{1}{2}\frac{1}{2}}\cos\left[\varphi(1) + \frac{\pi}{2} - \varphi(2)\right]$$

i.e. phase displaced by $\pi/2$.

In practice the "phase diversity" optical hybrid can be obtained by a double BS (beam splitter) configuration which separates both the signal S (gate 1) and the signal OL (gate 2) into two different paths, in one of which however a $\pi/2$ delay plate is inserted.

In the scheme of Figure 11 the "phase diversity" hybrid is "of single polarization". i.e. it requires OL and S to have at the hybrid input a state of polarization (SOP) which is fixed and parallel, typically vertical.

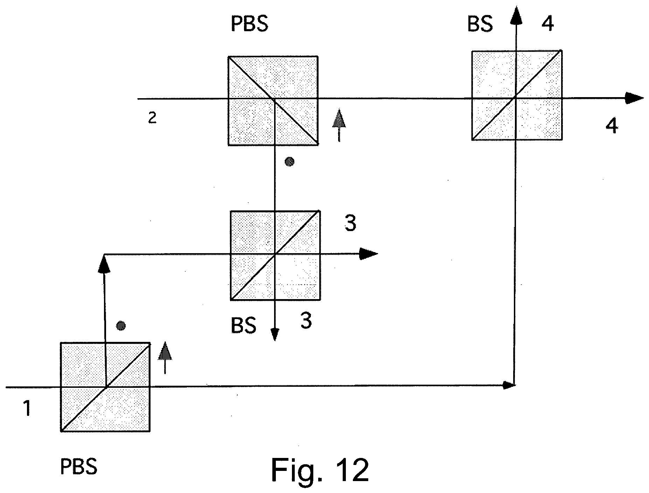

In the measurement scheme proposed in the present patent, reference is made to a variant of the scheme of Figure 11, i.e. to a "polarization diversity" optical hybrid which, for any input signal S SOP, enables the phase and amplitude information (I and Q) of both the signal polarization components (// and $\perp$) to be obtained. Figure 12 shows the input stage of the "polarization diversity" hybrid in which both the input signal S (gate 1) and the OL (gate 2) are projected on two main polarization states (typically vertical and horizontal) by PBSs (polarization beam splitters). The corresponding S and OL polarization components (i.e. the two outputs 3 and the two outputs 4 in Figure 12) are then mixed together, each via a scheme similar to that in Figure 11 which provides at its output the signals I and Q of one of the two polarization components of S.

The use of the "phase and polarization diversity" scheme, by not requiring a fixed signal S SOP at its input, on the one hand eliminates the problem of possible fluctuations or even fading of the interference signal (between S and OL), caused by the inevitable random variations in the SOPs of the signals which propagate through the fiber. In this respect, by combining I ($\approx\cos\varphi$) and Q ($\approx\sin\varphi$) of both the polarization components, the information present in the optical field phase can always be reconstructed, independently of the signal S SOP variations. On the other hand the information sought can instead be contained in the actual SOP of the signal S as in the case of measurements of the magnetic field induced by electric current. By the Faraday effect, current passage in fact induces a deterministic rotation of the signal S SOP which can be reconstructed by analyzing the evolution of the two polarization components leaving the coherent receiver.

In general the synoptic sensor can monitor both quasi-static and dynamic phenomena, such as slow deformations of a structure or even acoustic vibrations of a mechanical component. Both the slow deformations and the vibrations (i.e. repetitive contractions and elongations) determine as stated a variation in the optical phase which propagates through the fiber. By means of the coherent receiver, or by analyzing its output quadrature signals I ($\approx\cos\varphi$) and Q ($\approx\sin\varphi$) the time variation of said phase can be reconstructed. In the case of deformations (mechanical or thermal) the time variation of the quasi-static level of the phase $\varphi$ signal will be monitored, whereas in the case of vibrations a Fourier transformation of the phase signal will be undergone to spectrally monitor the vibration tone.

For example, it will be assumed that the sensing fiber is positioned along an industrial machine: different information can be extracted starting from the integral measurement along the entire fiber length. A machine temperature rise and/or its structural deformation can be identified by monitoring the difference between the level of the continuous component (DC) of the phase signal and a value relative to standard machine working conditions. A mechanical component malfunction (seized bearings, blade misalignment) can be identified by the appearance of new frequencies in the typical machine vibration spectrum obtainable from a spectral analysis of the phase signal. In its basic configuration, i.e. with a single hybrid, the sensor indicates the appearance of irregular vibrations but is unable to locate them. However the malfunctioning mechanical components are each characterized by specific vibration frequencies, often already tabulated or starting from which a machine model can be previously formed. Hence the defective component can be identified by comparing the spectra measured by the sensor with the tabulated data.

For example a coherent receiver of the dual polarization 90°. optical hybrid type COH28 marketed by the Kylia Company can be used.

This polarization diversity solution hence offers the advantage of being able to recover not only the optical field phase and amplitude but also the evolution of the polarization state of the signal originating from the sensing fiber, hence being suitable, for example, for measuring the magnetic field. The electrical information relative to current passage through a conductor about which the sensing fiber is suitably wound can in fact be extracted from the analysis of the rotation of the signal S polarization state induced by the Faraday effect.

The information contained in the output optical signals from the coherent receiver is then converted into the electrical domain and treated by advanced techniques by means of the digital signal processor 33 such as to make it available to mechanical, thermal and magnetic interpretation. In particular, the signal processing and the monitoring of the signal variations and signal interpretation depends on the particular application being studied.

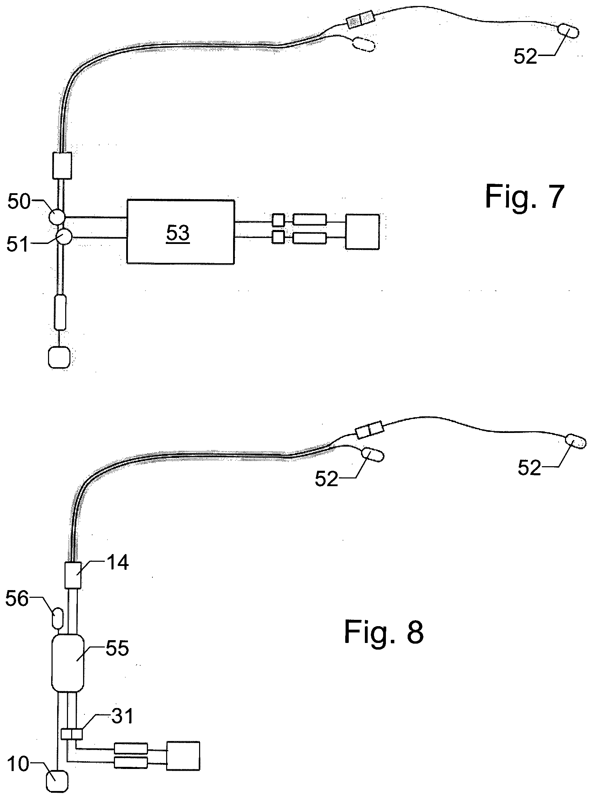

An alternative embodiment of a simplified sensor uses a coherent receiver only of phase diversity type to decode the mechanical and thermal (but not magnetic field) information collected simultaneously by the sensing fiber. In particular, with reference to Figure 7, this comprises, in contrast to the components of Figure 1, a circulator 50 positioned in the line of the signal S, namely a polarization maintaining circulator, and a circulator 51 positioned in the line of the signal OL, namely a polarization maintaining circulator. As a replacement for the mirror 23 there is a Faraday rotation mirror (FRM) 52, the receiver 53 being a coherent receiver of only phase diversity type, comprising a single polarization 90° optical hybrid, which requires that both the signal OL and the signal S reach the receiver with a fixed polarization state. For this reason, this simplified alternative embodiment does not enable analysis of any variations in the polarization state of S induced, for example, by the presence of a magnetic field.

A further alternative simplified sensor embodiment (Figure 8), for measuring only the phase and amplitude but not polarization of the magnetic field, uses a coherent receiver 55 comprising a 3x3 fiber optic coupler in place of the receiver 53. A laser source 10 is positioned at the first gate on one side of the coupler 55, while two photodiodes 31 are connected to the other two gates. The connector 14 is connected to two gates on the other side of the coupler 55, while a reflection nullifier 56 is connected to the other gate.

The use of Faraday rotation mirrors (FRM) 52 ensures that the signals S and OL reflected rearwards into the receiver input (or rather to the 3x3 coupler) always maintain a mutually parallel fixed polarization state, independently of fibre polarization fluctuations, so ensuring maximum visibility of the signals I and Q. Compared with the coherent receiver the coupler 55 provides at its output two signals I and Q phase displaced by 120° and not by 90°, from which the optical field phase and amplitude information can still be extracted, by electrical post-processing.

A possible variant, alternative to the coupler 55 formed with standard fibers, uses a coupler 60 with polarization maintaining (PM) fibers to achieve optical signal demodulation. The use of the PM coupler 60 implies that the sensing fiber 61, the reference fiber 62 and the connection fiber 63 are PM. In this manner the signals S and OL are not subjected to polarization fluctuations and can be reflected by using simple mirrors 64 instead of FRMs.

The schemes of Figure 7, 8 and 9, described for measuring intrinsic fiber parameters, are also extendable to the case of extrinsic parameter measurement, in a similar manner to the case of Figure 2, if the measurement zone (35) consists of isotropic material which hence induces only signal phase but not polarization variations. Specifically, in the case of Figures 7 and 8 the connector (21) is replaced by a collimator (36) preceded by a Faraday rotator (FR).

## Claims

1. A fiber optic sensor comprising: a laser source (10) which emits a first laser ray; an optical divider (11, 55, 60) which receives said first laser ray and provides a second laser ray (S) and a third laser ray (OL); a first optical fiber (20) which receives said second laser ray (S); a second optical fiber (24) which receives said third laser ray (OL); said first optical fiber (20) having the same length as said second optical fiber (24); said first optical fiber (20) and said second optical fiber (24) being side by side; a transmissive means (22, 35) associated with said first optical fiber (20) through which said second laser ray (S) transits; a first reflection means (23, 37, 52, 64) for said second laser ray (S) applied to said transmissive means (22, 35) to provide a reflected second laser ray (S); a second reflection means (25, 52, 64) for said third laser ray (OL) applied to said second optical fiber (24) to provide a reflected third ray (OL); a first circulator (13, 50, 55, 60) positioned between said optical divider (11, 55, 60) and said first optical fiber (20) to receive said second laser ray (S) reflected by said first reflection means (23, 37, 52, 64); a second circulator (16, 51, 55, 60) positioned between said optical divider (11, 55, 60) and said second optical fiber (24) to receive said third laser ray (OL) reflected by said second reflection means (25, 52, 64); a coherent receiver (30, 53, 55, 56) which receives said reflected second laser ray (S) and said reflected third laser ray (OL) to provide optical signals in quadrature (I and Q) at its output; opto/electric converters (31) which receive the optical outputs of the coherent receiver (30, 53, 55, 56) and produce analog electrical signals which are converted into digital signals (32) which are fed to a digital signal processor (33).

2. A sensor as claimed in claim 1, **characterized in that** said laser source (10) is continuous.

3. A sensor as claimed in claim 1, **characterized in that** said transmissive means comprises a third optical fiber (22) or a space (35).

4. A sensor as claimed in claim 1, **characterized in that** said coherent receiver (30) is a coherent receiver of phase diversity and polarization type; said first receiver means comprising a first circulator (13) and said second receiver means comprising a second circulator of polarization maintaining type (16); said first reflection means comprising a mirror (23) or a reflecting surface (37) and said second reflection means comprising a Faraday rotation mirror (25).

5. A sensor as claimed in claim 1, **characterized in that** said coherent receiver is of phase diversity type (53) and comprises a single polarization 90° optical hybrid; said first and second receiver means being circulators of polarization maintaining type; said first reflection means comprising a Faraday rotation mirror (52) or a reflecting surface (37) if the transmission means (35) is an isotropic space, said collimator (36) being preceded by a Faraday rotator; said second reflection means comprising a Faraday rotation mirror (52).

6. A sensor as claimed in claim 1, **characterized in that** said coherent receiver is of phase diversity type (55) and comprises a 3x3 fiber optic coupler; said first reflection means comprising a Faraday rotation mirror (52) or a reflecting surface (37) if the transmission means (35) is an isotropic space, said collimator (36) being preceded by a Faraday rotator; said second reflection means comprising a Faraday rotation mirror (52).

7. A sensor as claimed in claim 1, **characterized in that** said coherent receiver is of phase diversity type (60) and comprises a 3x3 fiber optic coupler of polarization maintaining type; said first and second optical fiber (62, 63) and said transmission means (61) being fibers of polarization maintaining type; said first reflection means comprising a mirror (64) or a reflecting surface (37) if the transmission means (35) is an isotropic space; said second reflection means comprising a mirror (64).

8. A sensor as claimed in claim 1, **characterized in that** said transmission means comprises a plurality of optical fibers (40, 41, 42, 44, 45).

9. A sensor as claimed in claim 1, **characterized in that** said laser source (10) is modulated (46).

10. A method for monitoring physical variations relating to an optical fiber, comprising the steps of dividing a first continuous laser ray into a second and a third laser ray; sending said second laser ray along a first optical fiber (20); sending said third laser ray along a second optical fiber (24); positioning said first optical fiber (20) and said second optical fiber (24) side by side inside a single cable; associating with said first optical fiber (20) a third optical fiber (22) or a measurement area (35); sending said second laser ray to said third optical fiber (22) or measurement area (35); reflecting (23, 37, 52, 64) said second laser ray; reflecting (25, 52, 64) said third laser ray, ensuring that its polarization state on entering a coherent receiver (30, 53, 55, 60) remains fixed; sending said reflected second laser ray and said reflected third laser ray to a coherent receiver (30) of phase diversity and polarization type or only of phase diversity type (53, 55, 60) and producing pairs of optical signals in quadrature (I and Q); converting (31) said optical signals in quadrature into a like number of electrical signals and digitizing them; sending said digital electrical signals to a digital signal processor (33); evaluating variations of said electrical signals.

**Patentansprüche**

1. Ein Glasfasersensor, der folgendes umfasst: eine Laserquelle (10), welche einen ersten Laserstrahl abgibt, einen optischen Teiler (11, 55, 60), der den genannten ersten Laserstrahl empfängt und jeweils einen zweiten Laserstrahl (S) und einen dritten Laserstrahl (OL) liefert; einen ersten Glasfaserleiter (20), welche den genannten zweiten Laserstrahl (S) empfängt; einen zweiten Glasfaserleiter (24), die den genannten dritten Laserstrahl (OL) empfängt; wobei der genannte erste Glasfaserleiter (20) die gleiche Länge aufweist wie der genannte zweite Glasfaserleiter (24); wobei der genannte erste Glasfaserleiter (20) und der genannte zweite Glasfaserleiter (24) Seite an Seite liegen; ein Übertragungselement (22, 35) das mit dem genannten ersten Glasfaserleiter (20) verbunden ist, das der genannte zweite Laserstrahl (S) durchquert; ein erstes Reflexionselement (23, 37, 52, 64) für den genannten zweiten Laserstrahl (S, das auf das genannte Übertragungselement (22, 35) aufgebracht wird, um einen reflektierten zweiten Laserstrahl (S) zu liefern; ein zweites Reflexionselement (25, 52, 64) für den genannten dritten Laserstrahl (OL), das auf den genannten zweiten Laserstrahl (24) aufgebracht wird, um einen reflektierten dritten Strahl (OL) zu erzielen; einen ersten Zirkulator (13, 50, 55, 60), welcher zwischen dem genannten optischen Teiler (11, 55, 60) und dem genannten ersten Glasfaserleiter (20) angeordnet ist, um den genannten zweiten Laserstrahl (S) zu empfangen, der durch das genannte erste Reflexionselement (23, 37, 52, 64) reflektiert wird; einen zweiten Zirkulator (16, 51, 55, 60), welcher zwischen dem genannten optischen Teiler (11, 55, 60) und dem genannten zweiten Glasfaserleiter (24) angeordnet ist, um den genannten dritten Laserstrahl (OL) zu empfangen, welcher durch das genannte zweite Reflexionselement (25, 52, 64) reflektiert wird; einen kohärenten Empfänger (30, 53, 55, 56), der jeweils den genannten reflektierten zweiten Laserstrahl (S) und den genannten reflektierten dritten Laserstrahl (OL) empfängt, um optische Signale in Quadratur (I und Q) an seinem Ausgang zu liefern; entsprechende optoelektrische Wandler (31), welche die optische Ausgangsleistung des kohärenten Empfängers (30, 53, 55, 56) empfangen und analoge elektrische Signale erzeugen, welche wiederum in digitale Signale (32) verwandelt werden, die jeweils in einen digitalen Signalprozessor (33) eingespeist werden.

2. Ein Sensor gemäß Anspruch 1, **dadurch gekennzeichnet, dass** die genannte Laserquelle (10) kontinuierlich ist.

3. Ein Sensor gemäß Anspruch 1, **dadurch gekennzeichnet, dass** das genannte Übertragungselement einen dritten Glasfaserleiter (22) oder einen Raum (35) umfasst.

4. Ein Sensor gemäß Anspruch 1, **dadurch gekennzeichnet, dass** der genannte kohärente Empfänger (30) ein kohärenter Empfänger des Typs mit Phasen- und Polarisations-Diversity ist; wobei das genannte erste Empfängerelement einen ersten Zirkulator (13) umfasst und das genannte zweite Empfängerelement einen zweiten Zirkulator des Typs mit Polarisationserhaltung (16) umfasst; und das genannte erste Reflexionselement jeweils einen Spiegel (23) oder eine entsprechende reflektierende Fläche (37) umfasst und das genannte zweite Reflexionselement welche einen Faraday Drehspiegel (25) umfasst.

5. Ein Sensor gemäß Anspruch 1, **dadurch gekennzeichnet, dass** der genannte kohärente Empfänger vom Typ mit Phasen-Diversity (53) ist und ein einzelnes Polarisation 90° optischer Hybrid umfasst; wobei die genannten ersten und zweiten Empfängerelemente Zirkulatoren des Typs mit Polarisationserhaltung sind; und das genannte erste Reflexionselement einen Faraday Drehspiegel (52) oder eine reflektierende Fläche (37) umfasst, wenn das Übertragungselement (35) ein isotroper Raum ist, wobei dem genannten Kollimator (36) ein Faraday Rotator vorausgeht; und das genannte Reflexionselement einen Faraday Drehspiegel (52) umfasst.

6. Ein Sensor gemäß Anspruch 1, **dadurch gekennzeichnet, dass** der genannte kohärente Empfänger des Typs mit Phasen-Diversity (55) ist und einen 3x3 Glasfaser-Koppler umfasst; wobei das genannte erste Reflexionselement einen Faraday Drehspiegel (52) oder eine entsprechende reflektierende Fläche (37) umfasst, wenn das Übertragungselement (35) ein isotroper Raum ist, wobei dem genannten Kollimator (36) jeweils ein Faraday Rotator vorausgeht und das genannte zweite Reflexionselement einen Faraday Drehspiegel (52) umfasst.

7. Ein Sensor gemäß Anspruch 1, **dadurch gekennzeichnet, dass** der genannte kohärente Empfänger des Typs mit Phasen-Diversity (60) ist und einen 3x3 Glasfaser-Koppler des Typs mit Polarisationserhaltung umfasst; wobei die genannten ersten und zweiten Glasfaserleiter (62, 63) und das genannte Übertragungselement (61) des Typs mit Polarisationserhaltung sind; und das genannte erste Reflexionselement einen Spiegel (64) beziehungsweise eine entsprechende reflektierende Fläche (37) umfasst, wenn das Übertragungselement (35) ein isotroper Raum ist; und das genannte zweite Reflexionselement einen Spiegel (64) umfasst.

8. Ein Sensor gemäß Anspruch 1, **dadurch gekennzeichnet, dass** das genannte Übertragungselement eine Vielzahl von Glasfaserleitern (40, 41, 42, 44, 45) umfasst.

9. Ein Sensor gemäß Anspruch 1, **dadurch gekennzeichnet, dass** die genannte Laserquelle (10) moduliert ist (46).

10. Ein Verfahren zur Überwachung physikalischer Variationen im Zusammenhang mit einem Glasfaserleiter, welches die Schritte der Unterteilung eines ersten kontinuierlichen Laserstrahls in einen zweiten und dritten Laserstrahl umfasst, wobei der genannte zweite Laserstrahl längs eines ersten Glasfaserleiters (20) gesendet wird und der genannte dritte Laserstrahl längs eines zweiten Glasfaserleiters (24) gesendet wird; wobei der genannte erste Glasfaserleiter (20) und der genannte zweite Glasfaserleiter (24) Seite an Seite innen in einem einzigen Kabel liegen, wobei mit dem genannten ersten Glasfaserleiter (20) ein dritter Glasfaserleiter (22) oder ein Messbereich (35) verbunden wird; und der genannte zweite Laserstrahl zu dem genannten dritten Glasfaserleiter (22) oder Messbereich (35) gesendet wird und der genannte zweite Laserstrahl reflektiert (23, 37, 52, 64) wird und der genannte dritte Laserstrahl reflektiert (25, 52, 64) wird, und gesichert wird, dass sein Polarisationszustand bei Eintritt in einen kohärenten Empfänger (30, 53, 55, 60) fixiert bleibt; wobei der genannte reflektierte zweite Laserstrahl und der genannte reflektierte dritte Laserstrahl jeweils an einen kohärenten Empfänger (30) des Typs mit Phasen- und Polarisations-Diversity beziehungsweise nur mit Phasen-Diversity (53, 55, 60) gesendet werden und optische Signalpaare in Quadratur (I und Q) erzeugt und die genannten optischen Signale in Quadratur in eine ähnliche Anzahl elektrischer Signale verwandelt (31) und diese jeweils digitalisiert werden; wobei die genannten digitalen elektrischen Signale an einen digitalen Signalprozessor (33) gesendet und die jeweiligen Variationen der genannten elektrischen Signale entsprechend evaluiert werden.

## Revendications

1. Capteur à fibre optique comprenant : une source laser (10) qui émet un premier rayon laser ; un diviseur optique (11, 55, 60) qui reçoit ledit premier rayon laser et fournit un deuxième rayon laser (S) et un troisième rayon laser (OL) ; une première fibre optique (20) qui reçoit ledit deuxième rayon laser (S) ; une deuxième fibre optique (24) qui reçoit ledit troisième rayon laser (OL) ; ladite première fibre optique (20) ayant la même longueur que ladite deuxième fibre optique (24) ; ladite première fibre optique (20) et ladite deuxième fibre optique (24) étant côte à côte ; un moyen de transmission (22, 35) associé à ladite première fibre optique (20) à travers laquelle passe ledit deuxième rayon laser (S) ; un premier moyen de réflexion (23, 37, 52, 64) pour ledit deuxième rayon laser (S) appliqué audit moyen de transmission (22, 35) pour fournir un deuxième rayon laser réfléchi (S) ; un deuxième moyen de réflexion (25, 52, 64) pour ledit troisième rayon laser (OL) appliqué à ladite deuxième fibre optique (24) pour fournir un troisième rayon réfléchi (OL) ; un premier circulateur (13, 50, 55, 60) positionné entre ledit diviseur optique (11, 55, 60) et ladite première fibre optique (20) pour recevoir ledit deuxième rayon laser (S) réfléchi par ledit premier moyen de réflexion (23, 37, 52, 64) ; un deuxième circulateur (16, 51, 55, 60) positionné entre ledit diviseur optique (11, 55, 60) et ladite deuxième fibre optique (24) pour recevoir ledit troisième rayon laser (OL) réfléchi par ledit deuxième moyen de réflexion (25, 52, 64) ; un récepteur cohérent (30, 53, 55, 56) qui reçoit ledit deuxième rayon laser réfléchi (S) et ledit troisième rayon laser réfléchi (OL) pour fournir des signaux optiques en quadrature (I et Q) au niveau de sa sortie ; des convertisseurs opto-électriques (31) qui reçoivent les sorties optiques du récepteur cohérent (30, 53, 55, 56) et produisent des signaux électriques analogiques qui sont convertis en signaux numériques (32) qui sont alimentés sur un processeur de signal numérique (33) .

2. Capteur selon la revendication 1, **caractérisé en ce que** ladite source laser (10) est continue.

3. Capteur selon la revendication 1, **caractérisé en ce que** ledit moyen de transmission comprend une troisième fibre optique (22) ou un espace (35).

4. Capteur selon la revendication 1, **caractérisé en ce que** ledit récepteur cohérent (30) est un récepteur cohérent du type à diversité de phase et polarisation ; ledit premier moyen récepteur comprenant un premier circulateur (13) et ledit deuxième moyen récepteur comprenant un deuxième circulateur du type à maintien de polarisation (16) ; ledit premier moyen de réflexion comprenant un miroir (23) ou une surface réfléchissante (37) et ledit deuxième moyen de réflexion comprenant un miroir à rotation de Faraday (25) .

5. Capteur selon la revendication 1, **caractérisé en ce que** ledit récepteur cohérent est du type à diversité de phase (53) et comprend un hybride optique à polarisation unique de 90°; lesdits premier et deuxième moyens récepteurs étant des circulateurs du type à maintien de polarisation ; ledit premier moyen de réflexion comprenant un miroir à rotation de Faraday (52) ou une surface réfléchissante (37) si le moyen de transmission (35) est un espace isotrope, ledit collimateur (36) étant précédé par un rotateur de Faraday ; ledit deuxième moyen de réflexion comprenant un miroir à rotation de Faraday (52).

6. Capteur selon la revendication 1, **caractérisé en ce que** ledit récepteur cohérent est du type à diversité de phase (55) et comprend un coupleur de fibre optique 3x3 ; ledit premier moyen de réflexion comprenant un miroir à rotation de Faraday (52) ou une surface réfléchissante (37) si le moyen de transmission (35) est un espace isotrope, ledit collimateur (36) étant précédé par un rotateur de Faraday ; ledit deuxième moyen de réflexion comprenant un miroir à rotation de Faraday (52).

7. Capteur selon la revendication 1, **caractérisé en ce que** ledit récepteur cohérent est du type à diversité de phase (60) et comprend un coupleur de fibre optique 3x3 du type à maintien de polarisation ; lesdites première et deuxième fibres optique (62, 63) et ledit moyen de transmission (61) étant des fibres du type à maintien de polarisation ; ledit premier moyen de réflexion comprenant un miroir (64) ou une surface réfléchissante (37) si le moyen de transmission (35) est un espace isotrope ; ledit deuxième moyen de réflexion comprenant un miroir (64).

8. Capteur selon la revendication 1, **caractérisé en ce que** ledit moyen de transmission comprend une pluralité de fibres optiques (40, 41, 42, 44, 45) .

9. Capteur selon la revendication 1, **caractérisé en ce que** ladite source laser (10) est modulée (46).

10. Procédé de surveillance de variations physiques relatives à une fibre optique, comprenant les étapes de division d'un premier rayon laser continu en un deuxième et un troisième rayon laser ; l'envoi dudit deuxième rayon laser le long d'une première fibre optique (20) ; l'envoi dudit troisième rayon laser le long d'une deuxième fibre optique (24) ; le positionnement de ladite première fibre optique (20) et ladite deuxième fibre optique (24) côte à côte à l'intérieur d'un unique câble ; l'association avec ladite première fibre optique (20) d'une troisième fibre optique (22) ou d'une zone de mesure (35) ; l'envoi dudit deuxième rayon laser à ladite troisième fibre optique (22) ou ladite zone de mesure (35) ; la réflexion (23, 37, 52, 64) dudit deuxième rayon laser ; la réflexion (25, 52, 64) dudit troisième rayon laser, en garantissant que son état de polarisation à l'entrée dans un récepteur cohérent (30, 53, 55, 60) reste fixe ; l'envoi dudit deuxième rayon laser réfléchi et dudit troisième rayon laser réfléchi à un récepteur cohérent (30) du type à diversité de phase et polarisation ou du type seulement à diversité de phase (53, 55, 60) et la production de paires de signaux optiques en quadrature (I et Q) ; la conversion (31) desdits signaux optiques en quadrature en un nombre identique de signaux électriques et leur numérisation ; l'envoi desdits signaux électriques numériques à un processeur de signal numérique (33) ; l'évaluation de variations desdits signaux électriques.

Fig. 1

Fig. 2

Fig. 3

Fig. 4

Fig. 5

Fig. 6

Fig. 7

Fig. 8

Fig. 9

Fig. 10

# Fig. 11

Fig. 12

**REFERENCES CITED IN THE DESCRIPTION**

**Patent documents cited in the description**

- FR 2613065